# EUROPÄISCHE PATENTSCHRIFT

(11) **EP 4 574 460 B1**
(45) Veröffentlichungstag und Bekanntmachung des Hinweises auf die Patenterteilung: **09.12.2026**
(21) Anmeldenummer: 24220840.3
(22) Anmeldetag: 18.12.2024
(51) Int. Cl.: B60C 11/03, B60C 11/12

(54) **FAHRZEUGREIFEN**
VEHICLE TYRE
BANDAGE PNEUMATIQUE POUR VÉHICULES

(30) Priorität: 19.12.2023 DE 102023212905
(43) Veröffentlichungstag der Anmeldung: 25.06.2025
(73) Patentinhaber: Continental Reifen Deutschland GmbH, 30175 Hannover (DE)
(72) Erfinder: Dr. Schürmann, Oliver, 30175 Hannover (DE); Dr. Tsotras, Achillefs, 30175 Hannover (DE); Baptista, Diogo, 30175 Hannover (DE); Nette, Daniel, 30175 Hannover (DE); Steffan, Michael, 30175 Hannover (DE); Hoever, Carsten, 30175 Hannover (DE)
(74) Vertreter: Continental Corporation

(56) Entgegenhaltungen:
- EP-A1- 1 431 077
- EP-A1- 2 803 501
- EP-A1- 2 881 265
- DE-A1- 102017 203 221
- DE-A1- 102017 211 129
- DE-A1- 4 007 760
- JP-A- 2003 260 909

## Beschreibung

Die Erfindung betrifft einen Fahrzeugreifen mit einem Laufstreifen mit zumindest einer Profilblockreihe mit Querrillen und Profilblöcken, welche jeweils einem eigenen Pitch mit einer Pitchlänge zugeordnet sind, wobei jeder Profilblock an jeder angrenzenden Querrille jeweils eine Blockkante aufweist und mit zumindest einem Einschnitt oder mehreren Einschnitten versehen ist, wobei die Einschnitte schmäler sind als die Querrillen, eine Breite von 0,2 mm bis 3,0 mm und zu den bezüglich der Umfangsrichtung gleich orientierten Blockkanten einen auf ihren geometrischen Schwerpunkt bezogenen, in Umfangsrichtung ermittelten Abstand aufweisen, wobei innerhalb der Profilblockreihe Profilblöcke vorgesehen sind, die zu verschiedenen Pitches übereinstimmender Pitchlänge gehören und bei welchen die Abstände der Einschnitte - von Profilblock zu Profilblock - zu den bezüglich der Umfangsrichtung gleich orientierten Blockkanten voneinander abweichen, wobei Pitches mit zumindest zwei unterschiedlichen Pitchlängen vorgesehen sind, wobei je ein Profilblock mit je einer angrenzenden Querrille jeweils einem eigenen Pitch zugeordnet ist.

Ein derartiger Fahrzeugreifen ist beispielsweise aus der EP 1 431 077 A1 bekannt. Dieser Fahrzeugreifen weist einen Laufstreifen mit über seinen Zentralbereich diagonal verlaufenden Querrillen sowie mit Einschnitten mit einer Mindestbreite von 1,5 mm auf, wobei die diagonal verlaufenden Querrillen gemeinsam mit einem in Umfangsrichtung langgestreckten Profilblock Basispitches bilden, welche durch die Einschnitte in zumindest zwei unterschiedliche Profilblockgruppen gegliedert sind, die in weitere Pitches geteilt sind, wobei zumindest ein Typ von Profilblockgruppe zumindest ein Pitch mehr aufweist als der oder ein anderer Typ von Profilblockgruppe. Die Basispitches können jeweils als aus einem langgestreckten Profilblock mit angrenzender Querrille bestehende Pitches im Sinne des Fahrzeugreifens der eingangs genannten Art aufgefasst werden. Beim Ausführungsbeispiel weisen zwei der Basispitches übereinstimmende Umfangslängen auf, wobei sich die Abstände der Einschnitte von Basispitch zu Basispitch unterscheiden. Dieser Reifen soll einen gleichmäßigen Abrieb und ein geringeres Abrollgeräusch aufweisen.

Weitere Fahrzeugreifen mit Laufstreifen, welche auf Pitches abgestimmte Ausgestaltungen von Profilblöcken aufweisen, sind beispielsweise aus der DE 10 2017 203 221 A1 oder der DE 10 2015 224 291 A1 bekannt.

Zur Verminderung des Abrollgeräusches eines Fahrzeugluftreifens ist es üblich, den im Laufstreifen über seinen Umfang aufeinanderfolgenden gleichartigen Profilabschnitten, sogenannten Pitches, unterschiedliche Umfangslängen (sogenannte Pitchlängen) zuzuordnen. Dabei werden in Laufstreifen üblicherweise Pitches mit zwei bis fünf unterschiedlichen Pitchlängen vorgesehen. Durch eine bestimmte Aufeinanderfolge dieser Pitches über den Umfang in einer sogenannten Pitchfolge wird ein breites Frequenzspektrum generiert und das Abrollgeräusch optimiert.

Der Erfindung liegt die Aufgabe zugrunde, bei einem Fahrzeugreifen der eingangs genannten Art das Abrollgeräusch weiter zu verringern.

Gelöst wird die gestellte Aufgabe erfindungsgemäß dadurch, dass die Einschnitte eine maximale Tiefe von 10% bis 100% der Profiltiefe aufweisen, wobei die Querrille eine Breite aufweist, deren Größe direkt proportional zur Pitchlänge des zugehörigen Pitchs ist.

Den Einschnitten werden somit individuelle Positionen in Profilblöcken, welche zu verschiedenen Pitches übereinstimmender Pitchlänge gehören, zugeordnet. Dadurch wird das Auftreten positiver Interferenzen im Abrollgeräusch vermieden bzw. weitgehend vermieden, sodass das Abrollgeräusch weiter reduziert ist. Die Breiten der Querrillen sind in die Verpitchung mitaufgenommen, wodurch das Abrollgeräusch zusätzlich reduziert ist.

Gemäß einer bevorzugten Ausführung sind innerhalb der Profilblockreihe Profilblöcke vorgesehen, die zu verschiedenen in Umfangsrichtung zueinander nächstliegenden Pitches übereinstimmender Pitchlänge gehören und bei welchen die Abstände der Einschnitte zu den bezüglich der Umfangsrichtung gleich orientierten Blockkanten voneinander abweichen. Dies trägt zu einer besonders effizienten Reduzierung positiver Geräuschinterferenzen bei.

Eine weitere bevorzugte Ausführung sieht vor, dass innerhalb der Profilblockreihe jeweils bei sämtlichen Profilblöcken, die zu verschiedenen Pitches übereinstimmender Pitchlänge gehören, die Abstände der Einschnitte zu den bezüglich der Umfangsrichtung gleich orientierten Blockkanten voneinander abweichen. Der grundlegende Erfindungsgedanke ist bei dieser Ausführung daher auf sämtliche Profilblöcke der Profilblockreihe ausgedehnt, was ebenfalls zu einer weiteren Verminderung des Abrollgeräusches beträgt.

Gemäß einer weiteren bevorzugten Ausführung betragen die Abstände, welche die Einschnitte zu jeder Blockkante des zugehörigen Profilblocks aufweisen, zumindest 2,0 mm, insbesondere zumindest 3,0 mm.

Es ist von Vorteil, wenn innerhalb der Profilblockreihe Profilblöcke vorgesehen sind, welche zu verschiedenen Pitches übereinstimmender Pitchlänge gehören und jeweils mit mehreren Einschnitten versehen sind, wobei jeweils innerhalb eines Profilblocks benachbarte Einschnitte voneinander auf die geometrischen Schwerpunkte bezogene, in die Umfangsrichtung projizierte Abstände voneinander aufweisen, wobei sich diese Abstände zwischen den Profilblöcken in Pitches übereinstimmender Pitchlänge voneinander unterscheiden. Das grundlegende Erfindungskonzept ist durch diese Ausführung auf die relative Lage der Einschnitte innerhalb der Profilblöcke erweitert. Das beim Abrollen auftretende Frequenzspektrum ist somit entsprechend erweitert und das Abrollgeräusch weiter vermindert.

Eine weiteren bevorzugte Ausführung kennzeichnet sich dadurch, dass die Querrillen eine Breite von 1,0 mm bis 10,0 mm, insbesondere von 2,0 mm bis 5,0 mm, und bevorzugt von zumindest 2,5 mm und / oder eine maximale Tiefe von 50% bis 100%, insbesondere von zumindest 70%, der Profiltiefe aufweisen.

Darüber hinaus ist gemäß einer weiteren bevorzugten Ausführung vorgesehen, dass die Breite der Einschnitte 0,4 mm bis 2,0 mm, vorzugsweise bis zu 1,6 mm, und/oder die maximale Tiefe der Einschnitte 30% bis 95%, insbesondere zumindest 50%, der Profiltiefe beträgt.

Gemäß einer weiteren bevorzugten Ausführung weichen die Abstände, welche die Einschnitte zu bezüglich der Umfangsrichtung gleich orientierten Blockkanten bei zu verschiedenen Pitches übereinstimmender Pitchlänge gehörenden Profilblöcken aufweisen, um zumindest 0,5 mm, insbesondere um zumindest 1,5 mm, besonders bevorzugt um zumindest 3,0 mm voneinander ab. Auch diese Maßnahme trägt zu einer weiteren Verringerung des Abrollgeräusches bei.

Eine weitere bevorzugte Ausführung besteht darin, dass der Laufstreifen zumindest eine weitere Profilblockreihe mit Querrillen und Profilblöcken aufweist, welche jeweils einem eigenen Pitch mit einer Pitchlänge zugeordnet sind, wobei jeder Profilblock der weiteren Profilblockreihe an jeder angrenzenden Querrille jeweils eine Blockkante aufweist und mit zumindest einem Einschnitt oder mehreren Einschnitten versehen ist, wobei die Einschnitte schmäler sind als die Querrillen, eine Breite von 0,2 mm bis 3,0 mm, eine maximale Tiefe von 10% bis 100% der Profiltiefe und zu den bezüglich der Umfangsrichtung gleich orientierten Blockkanten einen auf ihren geometrischen Schwerpunkt bezogenen, in Umfangsrichtung ermittelten Abstand aufweisen, wobei innerhalb der weiteren Profilblockreihe Profilblöcke vorgesehen sind, die zu verschiedenen Pitches übereinstimmender Pitchlänge gehören und bei welchen die Abstände der Einschnitte - von Profilblock zu Profilblock - zu den bezüglich der Umfangsrichtung gleich orientierten Blockkanten voneinander abweichen. Das erfindungsgemäße Konzept ist somit auf eine weitere Profilblockreihe angewandt.

Bei der letztgenannten bevorzugten Ausführung besteht eine vorteilhafte Weiterentwicklung darin, dass sich die weitere Profilblockreihe von der zumindest einen Profilblockreihe im Hinblick auf
a) die Pitchlängen und/oder
b) die Lage der Pitches am Reifenumfang und/oder
c) die Abfolge der Pitches und/oder
d) die Abstände der Einschnitte zu den Blockkanten unterscheidet.

Weitere Merkmale, Vorteile und Einzelheiten der Erfindung werden nun anhand der Zeichnung, die schematisch Ausführungsbeispiele der Erfindung zeigt, näher erläutert. Dabei zeigen
Fig. 1 eine Draufsicht auf eine Profilblockreihe eines Laufstreifens eines Fahrzeugreifens mit einer ersten Ausführungsvariante der Erfindung,
Fig. 2 eine Draufsicht auf einen Profilblock eines Laufstreifens zur Erläuterung einer zweiten Ausführungsvariante der Erfindung,
Fig. 3 eine Draufsicht auf einen Profilblock eines Laufstreifens zur Erläuterung einer dritten Ausführungsvariante der Erfindung,
Fig. 4 eine Draufsicht auf einen Profilblock eines Laufstreifens zur Erläuterung einer vierten Ausführungsvariante der Erfindung,
Fig. 5 eine Draufsicht auf einen Profilblock eines Laufstreifens zur Erläuterung einer fünften Ausführungsvariante der Erfindung,
Fig. 6 eine Draufsicht auf einen Profilblock eines Laufstreifens zur Erläuterung einer sechsten Ausführungsvariante der Erfindung und
Fig. 7 eine Draufsicht auf einen Profilblock eines Laufstreifens zur Erläuterung einer siebten Ausführungsvariante der Erfindung.

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Fahrzeugluftreifen, besonders bevorzugt Fahrzeugluftreifen in Radialbauart.

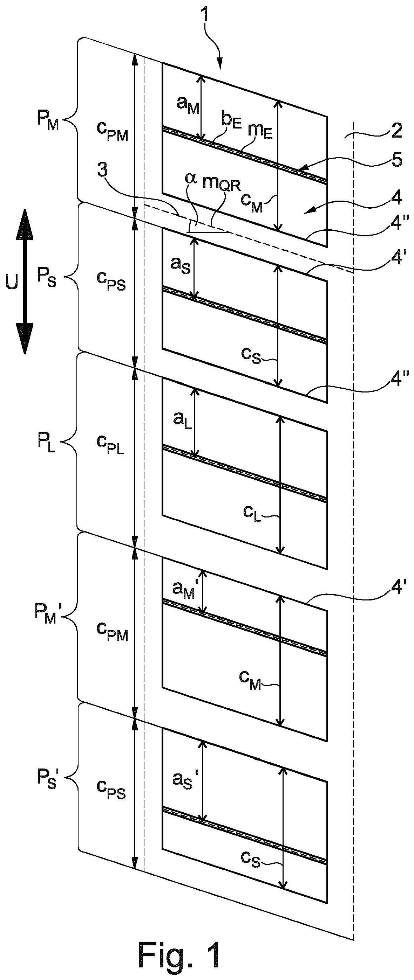

Fig. 1 zeigt eine Draufsicht auf einen Abschnitt einer in Umfangsrichtung umlaufenden mittleren Profilblockreihe 1 eines Laufstreifens eines Fahrzeugluftreifens. Die Umfangsrichtung ist durch einen Doppelpfeil U angedeutet.

Die mittlere Profiblockreihe 1 ist seitlich durch in Fig. 1 lediglich angedeutete Umfangsrillen 2 begrenzt und durch in die Umfangsrillen 2 einmündende Querrillen 3 in in Umfangsrichtung aufeinanderfolgende Profilblöcke 4 strukturiert. Die Querrillen 3 verlaufen, in Draufsicht betrachtet, parallel zueinander sowie zur axialen Richtung jeweils unter Winkel α von vorzugsweise 0° bis 50°, insbesondere von 10° bis 45°, und weisen jeweils eine in Draufsicht dem Rillenverlauf folgende Rillenmittellinie m_{QR} auf.

Der Laufstreifen ist gemäß einem Verfahren der Pitchlängenvariation geräuschoptimiert, sodass die mittlere Profilblockreihe 1 in Umfangsrichtung aufeinanderfolgende Pitches aufweist, insbesondere aus solchen zusammengesetzt ist, wobei im gezeigten Umfangsabschnitt der Profilblockreihe 1 beim Ausführungsbeispiel Pitches Ps, Ps' mit je einer kleinsten in Umfangsrichtung ermittelten Pitchlänge c_{PS}, Pitches P_{M}, P_{M}' mit je einer in Umfangsrichtung ermittelten Pitchlänge c_{PM} und ein Pitch P_{L} mit einer größten in Umfangsrichtung ermittelten Pitchlänge c_{PL} vorgesehen sind bzw. ist. Bevorzugter Weise setzt sich die mittlere Profilblockreihe 1 aus 50 bis 100, insbesondere aus bis zu 80, bevorzugt aus bis zu 60, in Umfangsrichtung aufeinanderfolgenden Pitches zusammen. Das Verhältnis der drei Pitchlänge c_{PL} : c_{PM} : c_{PS} beträgt beispielsweise 1,4 : 1,2 : 1.

Beim gezeigten Ausführungsbeispiel umfasst jeder Pitch Ps, Ps', P_{M}, P_{M}', P_{L} einen Profilblock 4 mitsamt der einen in Umfangsrichtung U angrenzenden Querrille 3.

Alternativ umfasst jeder Pitch Ps, Ps', P_{M}, P_{M}', P_{L} ausschließlich einen Profilblock 4, sodass die Querrille 3 nicht der Verpitchung unterliegt.

Die Profilblöcke 4 weisen mit den Pitchlängen c_{PS}, c_{PM}, c_{PL} korrelierende, also zu diesen direkt proportionale, an der Laufstreifenperipherie in die Umfangsrichtung projizierte, maximale Blocklängen cs (Profilblock 4 im Pitch Ps, Ps'), c_{M} (Profilblock 4 im Pitch P_{M}, P_{M}'), c_{L} (Profilblock 4 im Pitch P_{L}) auf. Die maximale Blocklänge cs, c_{M}, c_{L} ist jeweils die Länge an der längsten in Umfangsrichtung vorliegenden Stelle. Die Querrillen 3 weisen mit den Pitchlängen c_{PS}, c_{PM}, c_{PL} korrelierende, an der Laufstreifenperipherie sowie in Draufsicht senkrecht zu den Rillenmittellinien m_{QR} ermittelte Breiten B_{QR} von 1,0 mm bis 10,0 mm, insbesondere von 2,0 mm bis 5,0 mm, bevorzugt von zumindest 2,5 mm sowie in radialer Richtung eine maximale Tiefe (Tiefe an der tiefsten Stelle) von 50% bis 100%, insbesondere von zumindest 70%, der Profiltiefe auf. Somit ist die maximale Blocklänge c_{M} eines im Pitch P_{M}, P_{M}' befindlichen Profilblocks 4 größer als die maximale Blocklänge cs eines im Pitch Ps, Ps' befindlichen Profilblocks 4 und kleiner als die maximale Blocklänge c_{L} eines im Pitch P_{L} befindlichen Profilblocks 4. Analoges gilt für die Breiten B_{QR} der Querrillen 3.

Jeder Profilblock 4 weist an der einen angrenzenden Querrille 3 eine Blockkante 4' und an der anderen angrenzenden Querrille 3 eine Blockkante 4" auf, wobei die Blockkanten 4' die Profilblöcke 4 in die eine, in Fig. 1 nach oben gerichtete Umfangsrichtung und die Blockkanten 4" die Profilblöcke 4 in die andere, entgegengesetzte, in Fig. 1 nach unten gerichtete Umfangsrichtung begrenzen. An jeder Querrille 3 ist daher eine Blockkante 4' und eine Blockkante 4" ausgebildet. Die Grenzen zwischen den Pitches Ps, Ps', P_{M}, P_{M}', P_{L} verlaufen entlang einer der Blockkanten 4'.

Jeder Profilblock 4 ist mit einem Einschnitt 5 versehen, welcher beidseitig in die Umfangsrillen 2 einmündet, den Profilblock 4 daher durchquert, in Draufsicht gerade und parallel zu den Blockkanten 4', 4" verläuft, eine Breite von 0,2 mm bis 3,0 mm, insbesondere von 0,4 mm bis 2,0 mm, vorzugsweise von bis zu 1,6 mm, und in radialer Richtung eine maximale Tiefe (Tiefe an der tiefsten Stelle) von 10% bis 100%, insbesondere von 30% bis 95%, bevorzugt von zumindest 50%, der Profiltiefe sowie eine in Draufsicht mittig dem Einschnittverlauf folgende, an der Laufstreifenperipherie liegende Einschnittmittellinie m_{E} aufweist. Die Breite jedes Einschnitts 5 ist kleiner als die Breite B_{QR} jeder Querrille 3. Ferner weist jeder Einschnitt 5 eine Einschnittbasislinie b_{E} auf, welche, in Draufsicht betrachtet, gerade sowie zwischen den Enden der Einschnittmittellinie m_{E} verläuft. Da jeder Einschnitt 5, wie bereits erwähnt, in Draufsicht gerade verläuft, fällt die Einschnittbasislinie b_{E} mit der Einschnittmittellinie m_{E} zusammen.

Die Einschnitte 5 in den Profilblöcken 4 der Pitches P_{M}, Ps, P_{L} weisen zur zum jeweiligen Profilblock 4 gehörenden Blockkante 4' - bezogen auf die Einschnittbasislinie b_{E} - jeweils einen an der Laufstreifenperipherie in Umfangsrichtung ermittelten Abstand a_{M} (Einschnitt 5 im Pitch P_{M}), as (Einschnitt 5 im Pitch Ps), a_{L} (Einschnitt 5 im Pitch P_{L}) auf, wobei der Abstand a_{M}, as, a_{L} jeweils 50% der zugehörigen Blocklänge c_{M}, cs, c_{L} beträgt. Da sich die Blocklängen c_{M}, c_{S}, c_{L}, wie bereits erwähnt, in den Pitches P_{M}, Ps, P_{L} voneinander unterscheiden, unterscheiden sich auch die Abstände a_{M}, as, a_{L} voneinander.

Der Einschnitt 5 im Profilblock 4 des Pitchs P_{M}' weist zur Blockkante 4' - bezogen auf die Einschnittbasislinie b_{E} - einen an der Laufstreifenperipherie in Umfangsrichtung ermittelten Abstand a_{M}' von 33% der zugehörigen maximalen Blocklänge c_{M} auf.

Der Einschnitt 5 im Profilblock 4 des Pitchs Ps' weist zur Blockkante 4' - bezogen auf die Einschnittbasislinie b_{E} - einen an der Laufstreifenperipherie in Umfangsrichtung ermittelten Abstand a_{S}' von 66% der zugehörigen maximalen Blocklänge cs auf.

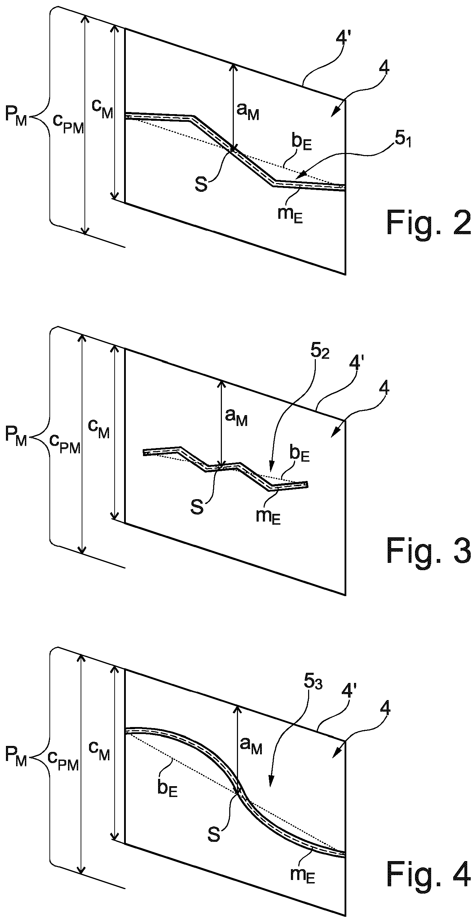

Fig. 2 bis Fig. 7 zeigen exemplarisch je eine Draufsicht auf einen Profilblock 4 in einem Pitch P_{M}, wobei die Darstellungen gegenüber Fig. 1 vergrößert sind. Wie nachfolgend erläutert ist, sind die in Fig. 2 bis Fig. 7 gezeigten Profilblöcke 4 anstelle des Einschnitts 5 mit einem Einschnitt 5₁ bis 5₆ versehen. In Analogie zum Ausführungsbeispiel der Fig. 1 sind jeweils Profilblöcke 4 in verschiedenen Pitches übereinstimmender Pitchlänge vorgesehen, wobei sich die Abstände der Einschnitte 5₁ bis 5₆ entsprechend unterscheiden.

Der in Fig. 2 gezeigte Profilblock 4 ist mit einem Einschnitt 5₁ versehen, welcher, in Draufsicht betrachtet, liegend und langgestreckt Z-förmig verläuft und in die Umfangsrillen 2 (vergl. Fig. 1) einmündet. Der Einschnitt 5₁ weist, in Draufsicht betrachtet, eine langgestreckt Z-förmig verlaufende Einschnittmittellinie m_{E} sowie eine die Enden der Einschnittmittellinie m_{E} verbindende, gerade verlaufende Einschnittbasislinie b_{E} mit einem dem Mittelpunkt der Einschnittbasislinie b_{E} entsprechenden, geometrischen Schwerpunkt S auf. Der Einschnitt 5₁ weist - bezogen auf den geometrischen Schwerpunkt S - zur Blockkante 4' einen an der Laufstreifenperipherie in Umfangsrichtung ermittelten Abstand a_{M} von 50% der Blocklänge c_{M} auf.

Der in Fig. 3 gezeigte Profilblock 4 ist mit einem Einschnitt 5₂ versehen, welcher, in Draufsicht betrachtet, in Form einer Zickzack-Welle verläuft, beidseitig innerhalb des Profilblocks 4 geschlossen endet, eine Einschnittmittellinie m_{E}, eine Einschnittbasislinie b_{E} mit einem dem Mittelpunkt der Einschnittbasislinie b_{E} entsprechenden, geometrischen Schwerpunkt S und - bezogen auf den geometrischen Schwerpunkt S - zur Blockkante 4' einen an der Laufstreifenperipherie in Umfangsrichtung ermittelten Abstand a_{M} von 50% der Blocklänge c_{M} aufweist.

Der in Fig. 4 gezeigte Profilblock 4 ist mit einem Einschnitt 5₃ versehen, welcher, in Draufsicht betrachtet, in Form einer langgezogenen S-Welle verläuft, beidseitig in die Umfangsrillen 2 (vergl. Fig. 1) einmündet, eine Einschnittmittellinie m_{E}, eine Einschnittbasislinie b_{E} mit einem dem Mittelpunkt der Einschnittbasislinie b_{E} entsprechenden, geometrischen Schwerpunkt S und - bezogen auf den geometrischen Schwerpunkt S - zur Blockkante 4' einen an der Laufstreifenperipherie in Umfangsrichtung ermittelten Abstand a_{M} von 50% der Blocklänge c_{M} aufweist.

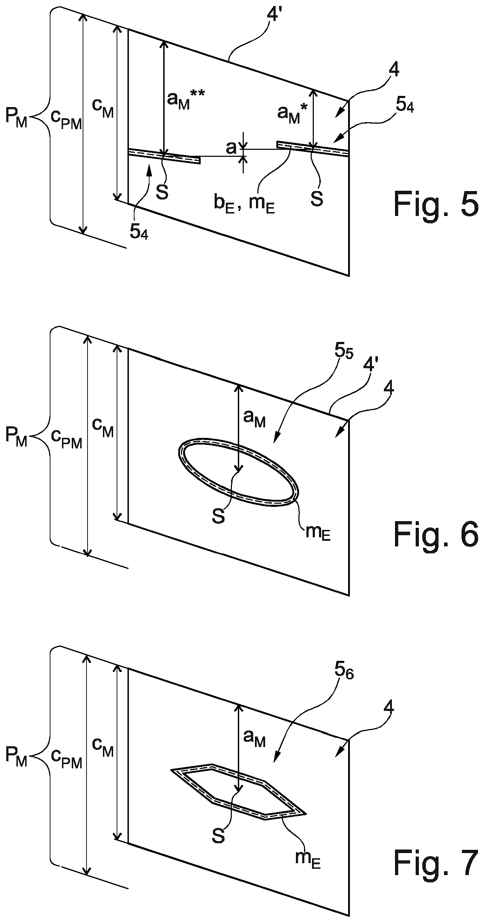

Der in Fig. 5 gezeigte Profilblock 4 ist mit zwei einseitig innerhalb des Profilblocks 4 geschlossen endenden Einschnitten 5₄ versehen, welche, in Draufsicht betrachtet, gerade verlaufen, wobei der eine Einschnitt 5₄ in die eine Umfangsrille 2 (vergl. Fig. 1) und der anderen Einschnitt 5₄ in die anderen eine Umfangsrille 2 (vergl. Fig. 1) einmündet. Der in Fig. 5 rechte Einschnitt 5₄ weist - bezogen auf den geometrischen Schwerpunkt S der Einschnittbasislinie b_{E} (fällt mit der Einschnittmittellinie m_{E} zusammen) - zur Blockkante 4' einen an der Laufstreifenperipherie in Umfangsrichtung ermittelten Abstand a_{M}* von 30% der maximalen Blocklänge c_{M} auf. Der in Fig. 5 linke Einschnitt 5₄ weist - bezogen auf den geometrischen Schwerpunkt S der Einschnittbasislinie b_{E} - zur Blockkante 4' einen an der Laufstreifenperipherie in Umfangsrichtung ermittelten Abstand a_{M}** von 70% der Blocklänge c_{M} auf. Ferner weisen die beiden Einschnitte 5 voneinander - bezogen auf die Schwerpunkte S der Einschnittbasislinien b_{E} - einen in Umfangsrichtung ermittelten Abstand a auf.

Der in Fig. 6 gezeigte Profilblock 4 ist mit einem Einschnitt 5₅ versehen, welcher, in Draufsicht betrachtet, in Form einer knickstellenfreien, geschlossenen Kurve, insbesondere in Form einer Ovallinie eines langgestreckten Ovals, verläuft. Der Einschnitt 5₅ weist bezogen auf die von der Einschnittmittellinie m_{E} eingeschlossene Fläche einen geometrischen Schwerpunkt S (Flächenschwerpunkt) auf. Der Einschnitt 5₅ weist ferner - bezogen auf den geometrischen Schwerpunkt S - zur Blockkante 4' einen an der Laufstreifenperipherie in Umfangsrichtung ermittelten Abstand a_{M} von 50% der Blocklänge c_{M} auf.

Der in Fig. 7 gezeigte Profilblock 4 ist mit einem Einschnitt 5₆ versehen, welcher, in Draufsicht betrachtet, in Form einer Knickstellen aufweisenden, geschlossenen Kurve, im Ausführungsbeispiel in Form eines Sechsecks, verläuft. Der Einschnitt 5₆ weist - bezogen auf die von der Einschnittmittellinie m_{E} eingeschlossene Fläche - einen geometrischen Schwerpunkt S (Flächenschwerpunkt) sowie - bezogen auf den geometrischen Schwerpunkt S - zur Blockkante 4' einen an der Laufstreifenperipherie in Umfangsrichtung ermittelten Abstand a_{M} von 50% der Blocklänge c_{M} auf.

Die Erfindung ist auf die beschriebenen Ausführungsbeispiele nicht beschränkt.

Bei Einschnitten mit zwei freien Einschnittenden beziehen sich die beschriebenen Abstände der Einschnitte zu den Blockkanten auf den geometrischen Schwerpunkt der Einschnittbasislinie, welche, in Draufsicht gerade sowie zwischen den Enden der mittig dem Einschnittverlauf folgenden Einschnittmittellinie verläuft. Der geometrische Schwerpunkt der Einschnittbasislinie entspricht dem Mittelpunkt der Einschnittbasislinie. Die Einschnitte mit zwei freien Einschnittenden können, in Draufsicht betrachtet, beispielsweise durchgehend gebogen und/oder abschnittsweise wellenförmig verlaufen.

Bei in Form von geschlossenen Kurven umlaufenden Einschnitten beziehen sich beschriebenen Abstände der Einschnitte zu den Blockkanten auf den geometrischen Schwerpunkt (Flächenschwerpunkt) der von der Einschnittmittellinie eingeschlossenen Fläche. Solche Einschnitte verlaufen insbesondere in Form einer Ovallinie, vorzugsweise einer Kreislinie oder einer Ellipsenlinie, oder in Form eines konvexen Polygons.

Die Querrillen können innerhalb der Profilblockreihe einseitig sacknutartige enden, sodass die Profilblöcke abschnittsweise zusammenhängen und die Profilblockreihe daher rippenartig ausgebildet ist.

Es können mehrere Profilblockreihen mit entsprechend ausgeführten Einschnitten vorgesehen sein.

Bevorzugt sind innerhalb der bzw. jeder Profilblockreihe Profilblöcke vorgesehen, die zu verschiedenen Pitches übereinstimmender Pitchlänge gehören, wobei die Abstände der Einschnitte - von Profilblock zu Profilblock - zu den bezüglich der Umfangsrichtung gleich orientierten Blockkanten insbesondere um zumindest 0,5 mm, vorzugsweise um zumindest 1,5 mm, besonders bevorzugt um zumindest 3,0 mm, voneinander abweichen.

### Bezugszeichenliste

- 1: mittlere Profilblockreihe
- 2: Umfangsrille
- 3: Querrille
- 4: Profilblock
- 4', 4": Blockkante
- 5, 5₁, 5₂, 5₃, 5₄, 5₅, 5₆: Einschnitt
- a: Abstand
- a_{L}, a_{M}, as: Abstand
- a_{M}', a_{S}': Abstand
- a_{M}*, a_{M}*': Abstand
- b_{E}: Einschnittbasislinie
- B_{QR}: Breite
- c_{M}, C_{L}, c_{S}: maximale Blocklänge
- CPM, CPL, c_{PS}: Pitchlänge
- m_{E}: Einschnittmittellinie
- m_{QR}: Rillenmittellinie
- P_{L}, P_{M}, P_{M}', Ps, P_{S}': Pitch
- S: geometrischer Schwerpunkt
- U: Doppelpfeil (Umfangsrichtung)
- α: Winkel

## Patentansprüche

1. Fahrzeugreifen mit einem Laufstreifen mit zumindest einer Profilblockreihe (1) mit Querrillen (3) und Profilblöcken (4), welche jeweils einem eigenen Pitch (P_{L}, P_{M}, P_{M}', P_{S}, P_{S}') mit einer Pitchlänge (c_{PM}, c_{PL}, c_{PS}) zugeordnet sind, wobei jeder Profilblock (4) an jeder angrenzenden Querrille (3) jeweils eine Blockkante (4', 4") aufweist und mit zumindest einem Einschnitt (5, 5₁, 5₂, 5₃, 5₄, 5₅, 5₆) oder mehreren Einschnitten (5, 5₁, 5₂, 5₃, 5₄, 5₅, 5₆) versehen ist, wobei die Einschnitte (5, 5₁, 5₂, 5₃, 5₄, 5₅, 5₆) schmäler sind als die Querrillen (3), eine Breite von 0,2 mm bis 3,0 mm und zu den bezüglich der Umfangsrichtung gleich orientierten Blockkanten (4') einen auf ihren geometrischen Schwerpunkt (S) bezogenen, in Umfangsrichtung ermittelten Abstand (a_{L}, a_{M}, as, a_{M}', a_{S}') aufweisen,
wobei innerhalb der Profilblockreihe (1) Profilblöcke (4) vorgesehen sind, die zu verschiedenen Pitches (P_{L}, P_{M}, P_{M}', P_{S}, P_{S}') übereinstimmender Pitchlänge (c_{PM}, c_{PL}, c_{PS}) gehören und bei welchen die Abstände (a_{L}, a_{M}, as, a_{M}', a_{S}', a_{M}*, a_{M}*') der Einschnitte (5, 5₁, 5₂, 5₃, 5₄, 5₅, 5₆) - von Profilblock (1a) zu Profilblock (1a) - zu den bezüglich der Umfangsrichtung gleich orientierten Blockkanten (4') voneinander abweichen, wobei Pitches (P_{L}, P_{M}, P_{M}', Ps, Ps') mit zumindest zwei unterschiedlichen Pitchlängen (c_{PM}, c_{PL}, c_{PS}) vorgesehen sind, wobei je ein Profilblock (4) mit je einer angrenzenden Querrille (3) jeweils einem eigenen Pitch (P_{L}, P_{M}, P_{M}', Ps, Ps') zugeordnet ist,
**dadurch gekennzeichnet,**
**dass** die Einschnitte (5, 5₁, 5₂, 5₃, 5₄, 5₅, 5₆) eine maximale Tiefe von 10% bis 100% der Profiltiefe aufweisen, wobei die Querrille (3) eine Breite (b_{QR}) aufweist, deren Größe direkt proportional zur Pitchlänge (c_{PM}, c_{PL}, c_{PS}) des zugehörigen Pitchs (P_{L}, P_{M}, P_{M}', Ps, Ps') ist.

2. Fahrzeugreifen nach Anspruch 1, **dadurch gekennzeichnet, dass** innerhalb der Profilblockreihe (1) Profilblöcke (4) vorgesehen sind, die zu verschiedenen in Umfangsrichtung zueinander nächstliegenden Pitches (P_{M}, P_{M}', Ps, Ps') übereinstimmender Pitchlänge (c_{PM}, c_{PS}) gehören und bei welchen die Abstände (a_{M}, a_{M}', as, as') der Einschnitte (5, 5₁, 5₂, 5₃, 5₄, 5₅, 5₆) zu den bezüglich der Umfangsrichtung gleich orientierten Blockkanten (4') voneinander abweichen.

3. Fahrzeugreifen nach Anspruch 1 oder 2, **dadurch gekennzeichnet, dass** innerhalb der Profilblockreihe (1) jeweils bei sämtlichen Profilblöcken (4), die zu verschiedenen Pitches (P_{M}, P_{M}', P_{S}, P_{S}') übereinstimmender Pitchlänge (c_{PM}, c_{PS}) gehören, die Abstände (a_{M}, a_{M}', as, as') der Einschnitte (5) zu den bezüglich der Umfangsrichtung gleich orientierten Blockkanten (4') voneinander abweichen.

4. Fahrzeugreifen nach einem der Ansprüche 1 bis 3, **dadurch gekennzeichnet, dass** die Abstände (a_{L}, a_{M}, as, a_{M}', as'), welche die Einschnitte (5) zu jeder Blockkante (4', 4") des zugehörigen Profilblocks (4) aufweisen, zumindest 2,0 mm, insbesondere zumindest 3,0 mm, betragen.

5. Fahrzeugreifen nach einem der Ansprüche 1 bis 4, **dadurch gekennzeichnet, dass** innerhalb der Profilblockreihe (1) Profilblöcke (4) vorgesehen sind, welche zu verschiedenen Pitches (P_{M}, P_{M}') übereinstimmender Pitchlänge (c_{PM}) gehören und jeweils mit mehreren Einschnitten (5₄) versehen sind, wobei jeweils innerhalb eines Profilblocks (4) benachbarte Einschnitte (5₄) voneinander auf die geometrischen Schwerpunkte (S) bezogene, in die Umfangsrichtung projizierte Abstände (a) voneinander aufweisen, wobei sich diese Abstände (a) zwischen den Profilblöcken (4) in Pitches (P_{M}, P_{M}') übereinstimmender Pitchlänge (c_{PM}) voneinander unterscheiden.

6. Fahrzeugreifen nach einem der Ansprüche 1 bis 5, **dadurch gekennzeichnet, dass** die Querrillen (3) eine Breite (B_{QR}) von 1,0 mm bis 10,0 mm, insbesondere von 2,0 mm bis 5,0 mm, und bevorzugt von zumindest 2,5 mm und / oder eine maximale Tiefe von 50% bis 100%, insbesondere von zumindest 70%, der Profiltiefe aufweisen.

7. Fahrzeugreifen nach einem der Ansprüche 1 bis 6, **dadurch gekennzeichnet, dass** die Breite der Einschnitte (5, 5₁, 5₂, 5₃, 5₄, 5₅, 5₆) 0,4 mm bis 2,0 mm, vorzugsweise bis zu 1,6 mm, und/oder die maximale Tiefe der Einschnitte (5, 5₁, 5₂, 5₃, 5₄, 5₅, 5₆) 30% bis 95%, insbesondere zumindest 50%, der Profiltiefe beträgt.

8. Fahrzeugreifen nach einem der Ansprüche 1 bis 7, **dadurch gekennzeichnet, dass** die Abstände (a_{L}, a_{M}, as, a_{M}', as', a_{M}*, a_{M}*'), welche die Einschnitte (5, 5₁, 5₂, 5₃, 5₄, 5₅, 5₆) zu bezüglich der Umfangsrichtung gleich orientierten Blockkanten (4') bei zu verschiedenen Pitches (P_{L}, P_{M}, P_{M}', Ps, Ps') übereinstimmender Pitchlänge (c_{PM}, c_{PL}, c_{PS}) gehörenden Profilblöcken (4) aufweisen, um zumindest 0,5 mm, insbesondere um zumindest 1,5 mm, besonders bevorzugt um zumindest 3,0 mm voneinander abweichen.

9. Fahrzeugreifen nach einem der Ansprüche 1 bis 8, **dadurch gekennzeichnet, dass** der Laufstreifen zumindest eine weitere Profilblockreihe mit Querrillen und Profilblöcken aufweist, welche jeweils einem eigenen Pitch mit einer Pitchlänge zugeordnet sind, wobei jeder Profilblock der weiteren Profilblockreihe an jeder angrenzenden Querrille jeweils eine Blockkante aufweist und mit zumindest einem Einschnitt oder mehreren Einschnitten versehen ist, wobei die Einschnitte schmäler sind als die Querrillen, eine Breite von 0,2 mm bis 3,0 mm, eine maximale Tiefe von 10% bis 100% der Profiltiefe und zu den bezüglich der Umfangsrichtung gleich orientierten Blockkanten einen auf ihren geometrischen Schwerpunkt bezogenen, in Umfangsrichtung ermittelten Abstand aufweisen, wobei innerhalb der weiteren Profilblockreihe Profilblöcke vorgesehen sind, die zu verschiedenen Pitches übereinstimmender Pitchlänge gehören und bei welchen die Abstände der Einschnitte - von Profilblock zu Profilblock - zu den bezüglich der Umfangsrichtung gleich orientierten Blockkanten voneinander abweichen.

10. Fahrzeugreifen nach Anspruch 9, **dadurch gekennzeichnet, dass** sich die weitere Profilblockreihe von der zumindest einen Profilblockreihe (1) im Hinblick auf
a) die Pitchlängen und/oder
b) die Lage der Pitches am Reifenumfang und/oder
c) die Abfolge der Pitches und/oder
d) die Abstände der Einschnitte zu den Blockkanten unterscheidet.

## Claims

1. Vehicle tyre comprising a tread having at least one row of profile blocks (1) with transverse grooves (3) and profile blocks (4), which are in each case assigned to a separate pitch (P_{L}, P_{M}, P_{M}', P_{S}, P_{S}') with a pitch length (c_{PM}, c_{PL}, c_{PS}), wherein each profile block (4) has at each adjacent transverse groove (3) a respective block edge (4', 4") and is provided with at least one sipe (5, 5₁, 5₂, 5₃, 5₄, 5₅ , 5₆) or a number of sipes (5, 5₁, 5₂, 5₃, 5₄, 5₅, 5₆), wherein the sipes (5, 5₁, 5₂, 5₃, 5₄, 5₅, 5₆) are narrower than the transverse grooves (3), have a width of 0.2 mm to 3.0 mm and are at a distance (a_{L}, a_{M}, a_{S}, a_{M}', a_{S}'), based on their geometric centre (S) and determined in the circumferential direction, from the block edges (4') oriented identically with respect to the circumferential direction,
wherein provided within the row of profile blocks (1) are profile blocks (4) which are associated with different pitches (P_{L}, P_{M}, P_{M}', P_{S}, P_{S}') of matching pitch length (c_{PM}, c_{PL}, c_{PS}) and in the case of which the distances (a_{L}, a_{M}, a_{S}, a_{M}', a_{S}', a_{M}*, a_{M}*') of the sipes (5, 5₁, 5₂, 5₃, 5₄, 5₅, 5₆) from the block edges (4') oriented identically with respect to the circumferential direction deviate from one another - from profile block (1a) to profile block (1a) -, wherein pitches (P_{L}, P_{M}, P_{M}', P_{S}, P_{S}') with at least two different pitch lengths (c_{PM}, c_{PL}, c_{PS}) are provided, each one profile block (4) with one adjacent transverse groove (3) each being respectively assigned to a separate pitch (P_{L}, P_{M}, P_{M}', P_{S}, P_{S}'),
**characterized**
**in that** the sipes (5, 5₁, 5₂, 5₃, 5₄, 5₅, 5₆) have a maximum depth of 10% to 100% of the tread depth, wherein the transverse groove (3) has a width (b_{QR}) of a size which is directly proportional to the pitch length (c_{PM}, c_{PL}, c_{PS}) of the associated pitch (P_{L}, P_{M}, P_{M}', P_{S}, P_{S}').

2. Vehicle tyre according to Claim 1, **characterized in that** provided within the row of profile blocks (1) are profile blocks (4) which are associated with different pitches (P_{M}, P_{M}', P_{S}, P_{S}') of matching pitch length (c_{PM}, c_{PS}) which are closest to one another in the circumferential direction and in the case of which the distances (a_{M}, a_{M}', a_{S}, a_{S}') of the sipes (5, 5₁, 5₂, 5₃, 5₄, 5₅, 5₆) from the block edges (4') oriented identically with respect to the circumferential direction deviate from one another.

3. Vehicle tyre according to Claim 1 or 2, **characterized in that**, within the row of profile blocks (1), the distances (a_{M}, a_{M}', a_{S}, a_{S}') of the sipes (5) from the block edges (4') oriented identically with respect to the circumferential direction deviate from one another in each case for all profile blocks (4) which are associated with different pitches (P_{M}, P_{M}', P_{S}, P_{S}') of matching pitch length (c_{PM}, c_{PS}).

4. Vehicle tyre according to one of Claims 1 to 3, **characterized in that** the distances (a_{L}, a_{M}, a_{S}, a_{M}', a_{S}') at which the sipes (5) are from each block edge (4', 4") of the associated profile block (4) are at least 2.0 mm, in particular at least 3.0 mm.

5. Vehicle tyre according to one of Claims 1 to 4, **characterized in that** provided within the row of profile blocks (1) are profile blocks (4) which are associated with different pitches (P_{M}, P_{M}') of matching pitch length (c_{PM}) and are in each case provided with a number of sipes (5₄), wherein in each case within a profile block (4) adjacent sipes (5₄) are at distances (a) from one another, based on the geometric centre (S) and projected in the circumferential direction, these distances (a) differing from one another between the profile blocks (4) in pitches (P_{M}, P_{M}') of matching pitch length (c_{PM}).

6. Vehicle tyre according to one of Claims 1 to 5, **characterized in that** the transverse grooves (3) have a width (B_{QR}) of 1.0 mm to 10.0 mm, in particular of 2.0 mm to 5.0 mm, and preferably of at least 2.5 mm, and/or a maximum depth of 50% to 100%, in particular of at least 70%, of the tread depth.

7. Vehicle tyre according to one of Claims 1 to 6, **characterized in that** the width of the sipes (5, 5₁, 5₂, 5₃, 5₄, 5₅, 5₆) is 0.4 mm to 2.0 mm,
preferably up to 1.6 mm, and/or the maximum depth of the sipes (5, 5₁, 5₂, 5₃, 5₄, 5₅, 5₆) is 30% to 95%, in particular at least 50%, of the tread depth.

8. Vehicle tyre according to one of Claims 1 to 7, **characterized in that** the distances (a_{L}, a_{M}, a_{S}, a_{M}', a_{S}', a_{M}*, a_{M}*') at which the sipes (5, 5₁, 5₂, 5₃, 5₄, 5₅, 5₆) are from block edges (4') oriented identically with respect to the circumferential direction in the case of profile blocks (4) associated with different pitches (P_{L}, P_{M}, P_{M}', P_{S}, P_{S}') of matching pitch length (c_{PM}, c_{PL}, c_{PS}) deviate from one another by at least 0.5 mm, in particular by at least 1.5 mm, particularly preferably by at least 3.0 mm.

9. Vehicle tyre according to one of Claims 1 to 8, **characterized in that** the tread has at least one further row of profile blocks with transverse grooves and profile blocks, which are in each case assigned to a separate pitch with a pitch length, wherein each profile block of the further row of profile blocks has at each adjacent transverse groove a respective block edge and is provided with at least one sipe or a number of sipes, wherein the sipes are narrower than the transverse grooves, have a width of 0.2 mm to 3.0 mm, have a maximum depth of 10% to 100% of the tread depth and are at a distance, based on their geometric centre and determined in the circumferential direction, from the block edges oriented identically with respect to the circumferential direction, wherein provided within the further row of profile blocks are profile blocks which are associated with different pitches of matching pitch length and in the case of which the distances of the sipes from the block edges oriented identically with respect to the circumferential direction deviate from one another - from profile block to profile block.

10. Vehicle tyre according to Claim 9, **characterized in that** the further row of profile blocks differs from the at least one row of profile blocks (1) with regard to
a) the pitch lengths and/or
b) the position of the pitches on the tyre circumference and/or
c) the sequence of the pitches and/or
d) the distances of the sipes from the block edges

## Revendications

1. Pneu de véhicule avec une bande de roulement avec au moins une rangée de blocs profilés (1) avec des rainures transversales (3) et des blocs profilés (4), qui sont associés chacun à leur propre pas (P_{L}, P_{M}, P_{M}', P_{S}, P_{S}') avec une longueur de pas (c_{PM}, c_{PL}, c_{PS}), chaque bloc profilé (4) comportant chacun sur chaque rainure transversale (3) adjacente un bord de bloc (4', 4") ou étant pourvu d'au moins une entaille (5, 5₁, 5₂, 5₃, 5₄, 5₅, 5₆) ou de plusieurs entailles (5, 5₁, 5₂, 5₃, 5₄, 5₅, 5₆), les entailles (5, 5₁, 5₂, 5₃, 5₄, 5₅, 5₆) étant plus étroites que les rainures transversales (3), présentant une largeur de 0,2 mm à 3,0 mm et une distance (a_{L}, a_{M}, a_{S}, a_{M}', a_{S}') déterminée dans la direction périphérique, se rapportant à leur centre de gravité géométrique (S) par rapport aux bords de bloc (4') orientés de manière identique par rapport à la direction périphérique,
des blocs profilés (4) étant prévus à l'intérieur de la rangée de blocs profilés (1), lesquels font partie de pas (P_{L}, P_{M}, P_{M}', P_{S}, P_{S}') différents d'une longueur de pas (c_{PM}, c_{PL}, c_{PS}) concordante et dans lesquels les distances (a_{L}, a_{M}, a_{S}, a_{M}', a_{S}', a_{M}*, a_{M}*') des entailles (5, 5₁, 5₂, 5₃, 5₄, 5₅, 5₆) - de bloc profilé (1a) en bloc profilé (1a) - par rapport aux bords du bloc (4'), orientés de manière identique par rapport à la direction périphérique divergent les unes des autres, des pas (P_{L}, P_{M}, P_{M}', P_{S}, P_{S}') avec au moins deux longueurs de pas (c_{PM}, c_{PL}, c_{PS}) différentes étant prévus, un bloc profilé (4) avec respectivement une rainure transversale (3) adjacente étant associé respectivement à un pas distinct (P_{L}, P_{M}, P_{M}', P_{S}, P_{S}'),
**caractérisé en ce**
**que** les entailles (5, 5₁, 5₂, 5₃, 5₄, 5₅, 5₆) présentent une profondeur maximale de 10 % à 100 % de la profondeur de profil, la rainure transversale (3) présentant une largeur (b_{QR}) dont la taille est directement proportionnelle à la longueur de pas (c_{PM}, c_{PL}, c_{PS}) du pas (P_{L}, P_{M}, P_{M}', P_{S}, P_{S}') associé.

2. Pneu de véhicule selon la revendication 1, **caractérisé en ce que** sont prévus à l'intérieur de la rangée de blocs profilés (1) des blocs profiles (4), qui font partie de différents pas (P_{M}, P_{M}', P_{S}, P_{S}') de longueur de pas (c_{PM}, c_{PS}) concordante les plus proches les uns par rapport aux autres et dans lesquels les distances (a_{M}, a_{M}', a_{S}, a_{S}') des entailles (5, 5₁, 5₂, 5₃, 5₄, 5₅, 5₆) par rapport aux bords de bloc (4') orientés de manière identique par rapport à la direction périphérique divergent les unes des autres.

3. Pneu de véhicule selon la revendication 1 ou 2, **caractérisé en ce que**, à l'intérieur de la rangée de blocs profilés (1), respectivement pour tous les blocs profilés (4), qui font partie de pas (P_{M}, P_{M}', P_{S}, P_{S}') différents d'une longueur de pas concordante, les distances (a_{M}, a_{M}', a_{S}, a_{S}') des entailles (5) par rapport aux bords de bloc (4') orientés de manière identique par rapport à la direction périphérique, divergent les unes des autres.

4. Pneu de véhicule selon l'une des revendications 1 à 3, **caractérisé en ce que** les distances (a_{L}, a_{M}, a_{S}, a_{M}', a_{S}'), qui comportent les entailles (5) par rapport à chaque bord de bloc (4', 4') du bloc profilé (4) associé, sont d'au moins 2,0 mm, en particulier d'au moins 3,0 mm.

5. Pneu de véhicule selon l'une des revendications 1 à 4, **caractérisé en ce que** sont prévus à l'intérieur de la rangée de blocs profilés (1) des blocs profilés (4), qui font partie de pas différents (P_{M}, P_{M}') d'une longueur de pas concordante (c_{PM}) et qui sont pourvus chacun de plusieurs entailles (5₄), des entailles (5₄) adjacentes respectivement à l'intérieur d'un bloc profilé (4) présentant les une des autres des distances (a) se rapportant aux centres de gravité géométriques (S), projetées dans la direction périphérique, lesdites distances (a) entre les blocs profilés (4) différant les unes des autres en pas (P_{M}, P_{M}') d'une longueur de pas (c_{PM}) concordante.

6. Pneu de véhicule selon l'une des revendications 1 à 5, **caractérisé en ce que** les rainures transversales (3) présentent une largeur (B_{QR}) de 1,0 mm à 10,0 mm, en particulier de 2,0 mm à 5,0 mm, et de manière préférée d'au moins 2,5 mm et/ou une profondeur maximale de 50 % à 100 %, en particulier d'au moins 70 %, de la profondeur de profilé.

7. Pneu de véhicule selon l'une des revendications 1 à 6, **caractérisé en ce que** la largeur des entailles (5, 5₁, 5₂, 5₃, 5₄, 5₅, 5₆) va de 0,4 mm à 2,0 mm, de préférence jusqu'à 1,6 mm, et/ou la profondeur maximale des entailles (5, 5₁, 5₂, 5₃, 5₄, 5₅, 5₆) va de 30 % à 95 %, en particulier est d'au moins 50 %, de la profondeur de profilé.

8. Pneu de véhicule selon l'une des revendications 1 à 7, **caractérisé en ce que** les distances (a_{L}, a_{M}, a_{S}, a_{M}', a_{S}', a_{M}*, a_{M}*'), qui comportent les entailles (5, 5₁, 5₂, 5₃, 5₄, 5₅, 5₆) par rapport aux bords de bloc (4') orientés de manière identique par rapport à la direction périphérique pour des blocs profilés (4) faisant partie de différents pas (P_{L}, P_{M}, P_{M}', P_{S}, P_{S}') d'une longueur de pas (c_{PM}, c_{PL}, c_{PS}) concordante, divergent les unes des autres d'au moins 0,5 mm, en particulier d'au moins 1,5 mm, de manière particulièrement préférée d'au moins 3,0 mm.

9. Pneu de véhicule selon l'une des revendications 1 à 8, **caractérisé en ce que** la bande de roulement comporte au moins une autre rangée de blocs profilés avec des rainures transversales et des blocs profilés, qui sont associés chacun à un pas distinct avec une longueur de pas, chaque bloc profilé de l'autre rangée de blocs profilés comportant sur chaque rainure transversale adjacente respectivement un bord de bloc et étant pourvu d'au moins une entaille ou de plusieurs entailles, les entailles étant plus étroites que les rainures transversales, présentant une largeur de 0,2 mm à 3,0 mm, une profondeur maximale de 10 % à 100 % de la profondeur de profil et, par rapport aux bords de bloc orientés de manière identique par rapport à la direction périphérique, une distance se rapportant à leur centre de gravité géométrique, déterminée dans la direction périphérique, des blocs profilés étant prévus à l'intérieur de l'autre rangée de blocs profilés, lesquels font partie de différents pas d'une longueur de pas concordante et dans lesquels les distances des entailles - de bloc profilé en bloc profilé - par rapport aux bords du bloc orientés de manière identique dans la direction périphérique divergent les unes autres.

10. Pneu de véhicule selon la revendication 9, **caractérisé en ce que** l'autre rangée de blocs profilés est différente de l'au moins une rangée de blocs profilés (1) concernant
a) les longueurs de pas et/ou
b) la position des pas sur la périphérie de pneu et/ou
c) la séquence des pas et/ou
d) les distances entre les entailles et les bords de bloc
